# DEMANDE DE BREVET EUROPEEN

(11) **EP 2 950 117 A1**
(43) Date de publication de la demande: **02.12.2015**
(21) Numéro de dépôt: 15169101.1
(22) Date de dépôt: 26.05.2015
(51) Int. Cl.: G01S 17/95, G01P 5/26, G01S 7/481

(54) **LIDAR COMPRENANT DES MOYENS OPTIQUES DE DEGIVRAGE OU DE PREVENTION DU GIVRAGE**

(30) Priorité: 28.05.2014 FR 1401220
(71) Demandeur: THALES, 92400 Courbevoie (FR)
(72) Inventeur: Rondeau, Philippe, 26400 ALLEX (FR); Bastien, Nicolas, 38840 SAINT BONNET DE CHAVAGNE (FR); Feneyrou, Patrick, 91430 IGNY (FR)
(74) Mandataire: Bréda, Jean-Marc

(57) **Abrégé**

Le domaine général de l'invention est celui des lidars optiques comportant un hublot optique (17, 132) et fonctionnant à une première longueur d'onde. Le hublot optique du lidar selon l'invention comporte une couche ou une lame réalisée dans un matériau optique. Le lidar comporte des moyens d'éclairage (20, 21, 22, 221) de ladite couche ou de ladite lame à une seconde longueur d'onde différente de la première longueur d'onde, ledit matériau étant transparent à la première longueur d'onde et absorbant à la seconde longueur d'onde.

## Description

Le domaine de l'invention est celui des systèmes Lidar Doppler embarqués sur aéronef. Ces systèmes permettent d'effectuer une mesure de vitesse relative de l'air à une certaine distance dudit aéronef.

Cette technique repose sur la mesure du décalage Doppler induit par les particules présentes dans l'atmosphère sur l'onde laser rétrodiffusée. L'utilisation de plusieurs faisceaux laser ou d'un système de balayage de faisceau permet d'accéder aux trois composantes du vecteur vitesse air dans l'ensemble du domaine de vol du porteur.

Ces systèmes nécessitent l'utilisation d'un hublot optique quasi conforme sur la peau du porteur. Ce hublot laisse passer le faisceau laser dans l'atmosphère sans en altérer les propriétés optiques et géométriques et sans atténuer la puissance émise.

Compte-tenu des conditions d'utilisation sur aéronef, un système de réchauffage approprié est indispensable afin d'éviter le givrage du hublot lorsque les conditions atmosphériques de température et de présence d'eau sont réunies. Le givrage a pour conséquence de dégrader les performances optiques du hublot et donc de diminuer la précision de la mesure de vitesse. Dans certaines conditions de fort givrage, la mesure est même totalement perdue.

Pour empêcher le givrage du hublot, plusieurs solutions techniques existent. Une première solution consiste à mettre en oeuvre un réchauffage par conduction. Des résistances électriques sont en contact avec la structure de maintien du hublot et permettent de générer la puissance thermique nécessaire. Une seconde solution consiste à disposer un film résistif sur la surface ou dans l'épaisseur du hublot. Cette seconde solution est, par exemple, utilisée pour le dégivrage des pare-brises d'aéronefs. Une fine couche résistive est alors disposée entre deux lames constituant le pare-brise.

Les défauts principaux de ces deux solutions sont les suivants. La première solution entraîne de fortes contraintes thermiques dues à l'injection localisée de la puissance thermique. Ces contraintes déforment le front d'onde de l'onde optique transmise à l'émission et à la réception. Cette déformation peut engendrer une baisse importante du niveau de signal reçu et produire une dégradation de la précision de mesure, voir empêcher la mesure si le rapport signal à bruit est trop dégradé. D'autre part, cette technique est inenvisageable pour dégivrer de grandes surfaces optiques. Enfin, le chauffage de la monture du hublot représente une consommation électrique importante due à la dissipation sur une plus grande surface de l'énergie thermique apportée. Une solution permettant partiellement de pallier ces différents inconvénients est l'utilisation d'un hublot en saphir. Ce matériau présente une très forte conductivité thermique. Si le hublot est prévu avec une surface suffisante, les résistances de chauffage peuvent être collées directement sur la surface non optiquement utile du hublot en saphir. Cependant, l'emploi du saphir présente un inconvénient : il est biréfringent. Lorsque l'on travaille en lumière polarisée, la biréfringence peut diminuer le niveau de signal utile si elle n'est pas correctement prise en compte.

Le principal inconvénient de la seconde solution est une perte de transmission due à la réflectivité des films chauffants.

Le lidar selon l'invention ne présente pas ces inconvénients. Il comporte un hublot optique qui est à la fois transparent aux longueurs d'onde d'émission du lidar et absorbant dans une seconde gamme de longueur d'onde. On peut ainsi le chauffer en l'éclairant dans cette seconde gamme spectrale. Plus précisément, l'invention a pour objet un lidar optique comportant un hublot optique et fonctionnant à une première longueur d'onde, caractérisé en ce que le hublot comporte une couche ou une lame réalisée dans un matériau optique et des moyens d'éclairage de ladite couche ou de ladite lame à une seconde longueur d'onde différente de la première longueur d'onde, ledit matériau étant transparent à la première longueur d'onde et absorbant à la seconde longueur d'onde.

Avantageusement, le hublot comporte uniquement une lame réalisée dans ledit matériau optique.

Avantageusement, les moyens d'éclairages ayant un diagramme d'émission connu, ils sont répartis de façon à optimiser l'homogénéité d'éclairage du hublot en fonction dudit diagramme d'émission.

Avantageusement, les moyens d'éclairage sont des diodes électroluminescentes.

Avantageusement, la première longueur d'onde est située dans le proche infrarouge et la seconde longueur d'onde dans le spectre visible.

Avantageusement, la première longueur d'onde est située dans l'ultraviolet et la seconde longueur d'onde dans le visible ou le proche infrarouge.

Avantageusement, le matériau est un verre de référence FLG850 de la marque Schott^{®}.

L'invention sera mieux comprise et d'autres avantages apparaîtront à la lecture de la description qui va suivre donnée à titre non limitatif et grâce aux figures annexées parmi lesquelles :
La figure 1 représente l'architecture générale d'un lidar selon l'invention ;
La figure 2 représente la transmission spectrale du matériau d'un hublot optique selon l'invention ;
La figure 3 représente l'émission spectrale des moyens d'éclairage dudit hublot optique selon l'invention ;
La figure 4 représente le synoptique d'une tête optique de lidar selon l'invention.

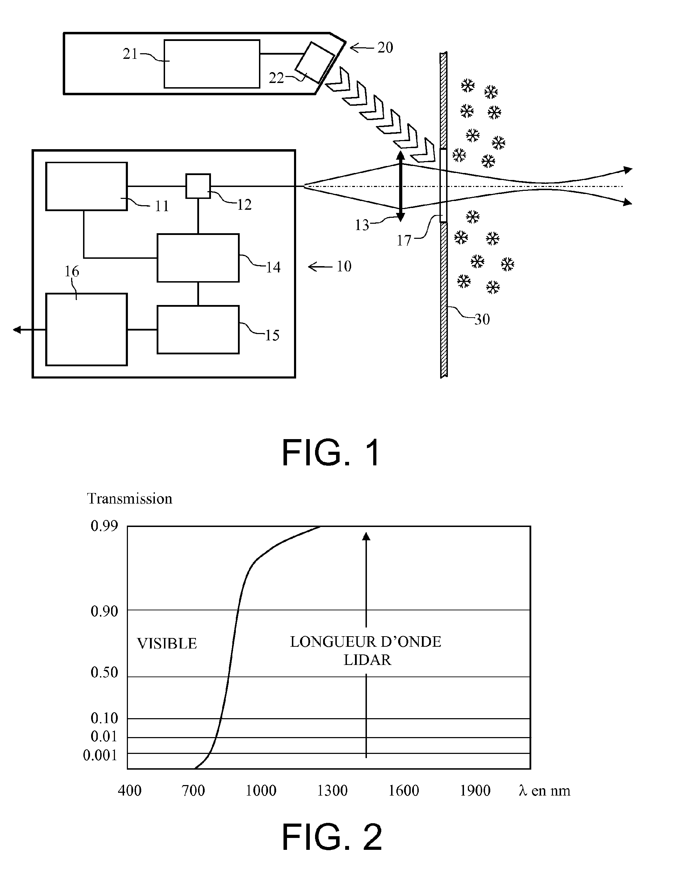

La figure 1 représente l'architecture générale d'un lidar selon l'invention, monté sur aéronef. Il comporte un premier ensemble 10 qui assure la mesure de vitesse proprement dit. Cet ensemble comporte une source laser d'émission 11, un séparateur optique 12, une optique d'émission-réception 13, un interféromètre 14, des moyens ce détection 15 et un traitement du signal 16.

Dans le cas de la figure 1, l'optique d'émission-réception 13 est représentée par une simple lentille et placée en amont d'un hublot 17 de séparation entre le lidar et l'extérieur. Le hublot 17 est monté sur la peau 30 de l'aéronef. Les conditions givrantes sont représentées par des flocons sur cette figure 1. Cette optique d'émission-réception 13 focalise le rayonnement d'émission à une distance déterminée de la peau de l'aéronef. On sait que, par effet Doppler, le rayonnement optique rétrodiffusé par les particules atmosphériques présentes au point de focalisation est légèrement décalé en fréquence d'une valeur proportionnelle à la vitesse relative des particules par rapport à l'aéronef.

Le rayonnement reçu passe à travers le séparateur optique 12 et interfère avec une fraction du rayonnement émis par la source laser d'émission 11 dans l'interféromètre 14. On obtient un signal de battement à la fréquence Doppler. Celui-ci est reçu par un ensemble de photodétection 15. L'ensemble électronique 16 permet de réaliser le traitement du signal ainsi obtenu et de calculer la vitesse relative de l'aéronef à partir de la connaissance de la fréquence de battement.

Le lidar selon l'invention comporte un second ensemble 20 dit de dégivrage du hublot 17. Il comporte essentiellement des moyens d'alimentation, de gestion et de contrôle 21 et des moyens d'éclairage 22 du hublot. Le rayonnement émis par les moyens d'éclairage 22 est représenté par des chevrons sur la figure 1.

Le principe de fonctionnement est le suivant. Le hublot comporte une couche de matériau ou est réalisé dans un matériau dont le coefficient d'absorption varie fortement en fonction de la longueur d'onde. Ainsi, il est possible de choisir la longueur d'onde de la source 22 suffisamment différente de celle de l'onde d'émission du lidar afin que le hublot absorbe la longueur d'onde de la source d'éclairage 22 et transmette la longueur d'onde d'émission. En absorbant la lumière de la source 22, le hublot s'échauffe et la fonction de dégivrage est réalisée. Si la couche de matériau absorbant est de faible épaisseur, l'échauffement est essentiellement surfacique, si la totalité du hublot est réalisée en matériau absorbant, l'échauffement est essentiellement volumique. Cette seconde solution est préférable à la première et permet une absorption plus homogène et donc une meilleure qualité du front d'onde transmis.

Les matériaux optiques présentant cette propriété d'absorption sont essentiellement des verres colorés. A titre d'exemple, la figure 2 représente la variation d'absorption d'un verre coloré connu sous la référence FLG850 et commercialisé par la société Schott^{®}. La transmission du verre coloré est donnée pour des longueurs d'onde comprises entre 400 nanomètres et 2000 nanomètres. L'échelle des transmissions est logarithmique. Ce matériau a une longueur d'onde de coupure centrée à 850 nanomètres. En dessous de cette longueur d'onde, le matériau absorbe la lumière, au-delà de cette longueur d'onde, il est transparent. Par exemple, si la longueur d'onde d'émission du lidar est située dans le proche infrarouge autour de 1550 nanomètres, elle est entièrement transmise par le FLG850. A l'inverse, si les moyens d'éclairage et de réchauffage émettent dans le visible, la lumière émise est entièrement absorbée.

Dans le cas de lidar utilisant une longueur d'onde ultraviolette plutôt qu'infrarouge, on peut choisir des matériaux en verre coloré absorbant les rayonnements visibles et infrarouges tout en transmettant les rayonnements ultraviolets.

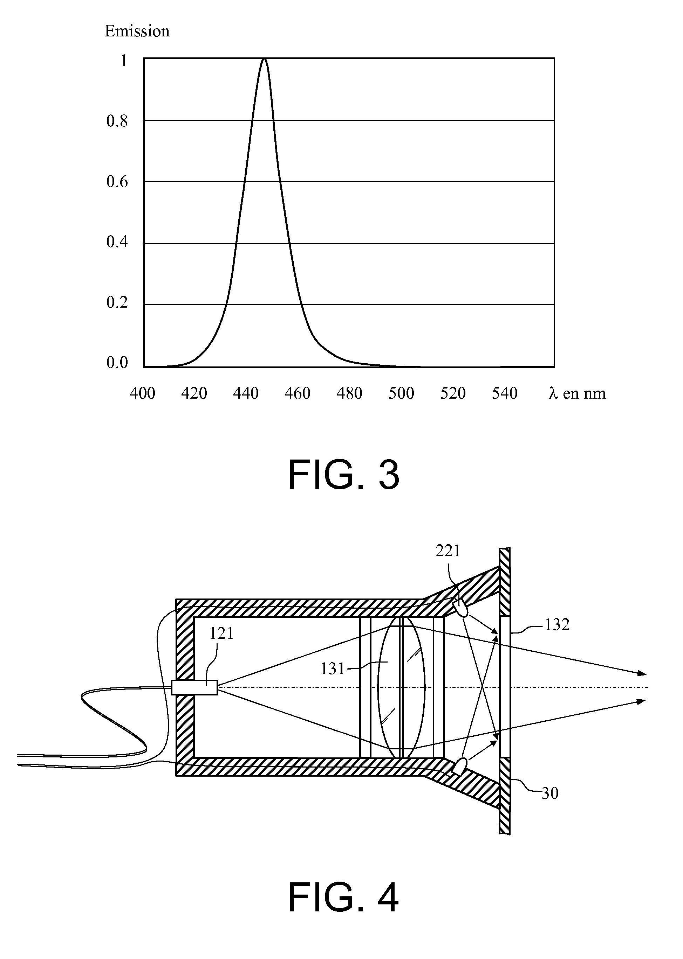

Les sources d'éclairage 22 peuvent être des diodes électroluminescentes. A titre d'exemple, la figure 3 représente le spectre d'émission d'une diode électroluminescente émettant dans le bleu. L'émission est donnée pour des longueurs d'onde comprises entre 400 nanomètres et 560 nanomètres. L'échelle de la puissance émise est normalisée sur cette figure 3. Le spectre comporte un pic d'émission à 450 nanomètres et présente une largeur spectrale à mi-hauteur de 25 nanomètres. Des diodes de ce type peuvent émettre un flux lumineux de plusieurs watts avec un excellent rendement énergétique.

La figure 4 représente un exemple de réalisation d'une tête optique d'émission-réception d'un lidar selon l'invention. La lumière est issue d'une fibre optique 121 reliée aux moyens d'émission et de réception du LIDAR. A titre d'exemple, la longueur d'onde d'émission du lidar est proche de 1,55 µm.

La tête optique comporte essentiellement des optiques 131 et un hublot de sortie 132.

Le réchauffage du hublot 132 est assuré par une couronne de diodes électroluminescentes 221 émettant dans le visible, c'est-à-dire dans une gamme de longueurs d'onde comprise entre 400 nanomètres et 800 nanomètres. Ces diodes peuvent émettre à la longueur d'onde de 450 nanomètres tel que décrit précédemment. Ces diodes sont intégrées dans la structure mécanique de la tête optique. Elles sont disposées de façon à optimiser l'homogénéité de l'éclairage du hublot optique 132 en fonction de leur diagramme d'émission. Une optique simple peut éventuellement être associée à chaque émetteur afin d'améliorer l'homogénéité ou l'efficacité de l'éclairage.

Le hublot optique peut être réalisé en FLG 850. Dans ce cas, la transmission du rayonnement d'émission est supérieure à 99% et l'absorption du rayonnement émis par les diodes de réchauffage est supérieure à 99%.

Les avantages du système de dégivrage selon l'invention sont les suivants :
- Absorption homogène de l'énergie de réchauffage sur toute la surface du hublot, évitant ainsi les problèmes de contraintes thermiques et de déformation de front d'onde transmis ;
- Dégivrage parfaitement limité à la zone utile du hublot et donc limitation des pertes par conduction par rapport à une solution de dégivrage par conduction ;
- Possibilité de réaliser un traitement antireflet adapté à la longueur d'onde d'émission du lidar pour limiter encore les pertes par réflexion vitreuse ;
- Filtrage naturel du rayonnement solaire émis essentiellement dans le visible ;
- Faible coût de réalisation du système ;
- Grande fiabilité du système.

## Revendications

1. Lidar optique comportant un hublot optique (17, 132) et fonctionnant à une première longueur d'onde, **caractérisé en ce que** le hublot comporte une couche ou une lame réalisée dans un matériau optique et des moyens d'éclairage (20, 21, 22, 221) de ladite couche ou de ladite lame à une seconde longueur d'onde différente de la première longueur d'onde, ledit matériau étant transparent à la première longueur d'onde et absorbant à la seconde longueur d'onde.

2. Lidar optique selon la revendication 1, **caractérisé en ce que** le hublot comporte uniquement une lame réalisée dans ledit matériau optique.

3. Lidar optique selon l'une des revendications précédentes, **caractérisé en ce que** les moyens d'éclairage sont des diodes électroluminescentes (221).

4. Lidar optique selon la revendication 3, **caractérisé en ce que** les diodes électroluminescentes sont réparties en couronne.

5. Lidar optique selon l'une des revendications précédentes, **caractérisé en ce que** la première longueur d'onde est située dans le proche infrarouge et la seconde longueur d'onde dans le spectre visible.

6. Lidar optique selon l'une des revendications 1 à 4, **caractérisé en ce que** la première longueur d'onde est située dans l'ultraviolet et la seconde longueur d'onde dans le visible ou le proche infrarouge
